# EUROPÄISCHE PATENTANMELDUNG

(11) **EP 3 326 992 A1**
(43) Veröffentlichungstag der Anmeldung: **30.05.2018**
(21) Anmeldenummer: 17199200.1
(22) Anmeldetag: 30.10.2017
(51) Int. Cl.: C05F 3/00

(54) **VERFAHREN ZUR BEHANDLUNG VON GÜLLE UND GÄRRESTEN MIT HUMINSÄURE ENTHALTENDEN STOFFEN**

(30) Priorität: 24.11.2016 DE 102016223352
(71) Anmelder: RWE Power AG, 45128 Essen (DE)
(72) Erfinder: MEYRAHN, Horst, 50321 Brühl (DE)
(74) Vertreter: Kierdorf Ritschel Richly

(57) **Zusammenfassung**

Die Erfindung betrifft ein Verfahren zur Behandlung von Gülle umfassend folgende Verfahrensschritte:
- Ein erstes Mischen der Gülle mit huminsäurehaltigen, körnigen Feststoffen,
- Einwirken von Gülle und den huminsäurehaltigen, körnigen Feststoffen ohne Agitation über eine Verweilzeit, bis sich in der Mischung von Gülle und Feststoffen eine Schichtbildung zwischen flüssigen und festen Phasen einstellt,
- Trennen der festen Phase von der flüssigen Phase des Gemischs.

## Beschreibung

Die Erfindung betrifft ein Verfahren zur Behandlung von Gülle und Gärresten, bei welchem letzteren Huminsäure enthaltende Feststoffe zugemischt werden und nach einer ausreichenden Verweilzeit die Feststoffe von der flüssigen Phase des Gemischs abgetrennt werden.

Unter Gülle im Sinne der vorliegenden Erfindung sind Exkremente aus einstreuarmer bis einstreuloser Nutztierhaltung mit verhältnismäßig hohem Wasseranteil zu verstehen. Je nach Beigabe von Einstreu und Wasser spricht man von Dick- oder Dünngülle, Schwemmmist oder Flüssigmist. Hohe Gehalte an gebundenem Stickstoff, Phosphor, Kalium und anderen Nährstoffen machen Gülle zu einem wichtigen Dünger, der überwiegend zur Feldausbringung vorgesehen ist. Grundsätzlich sind Verfahren bekannt, die eine Aufbereitung von Gülle zwecks anderweitiger Verwendung vorsehen.

Als Gärrest wird der flüssige oder feste Rückstand bezeichnet, der bei der Vergebung von Biomasse in einer Biogasanlage zurückbleibt. Wegen des hohen Gehalts an Nährstoffen werden Gärreste meist als landwirtschaftlicher Dünger verwendet. Im Allgemeinen werden Gärreste auch als Biogasgülle oder Gärprodukte bezeichnet.

Ein Verfahren der eingangs genannten Art, bei welchem vorgesehen ist, eine mit Nährstoffen abgereicherte flüssige Phase und eine mit Nährstoffen angereicherte feste Phase jeweils unterschiedlichen Verwendungen zuzuführen, ist beispielsweise aus der EP 0 449 184 A1 bekannt. Bei dem in der EP 0 449 184 A1 beschriebenen Verfahren ist vorgesehen, dass die Trennung des Feststoffs von der flüssigen Phase des Gemischs nach einer Verweilzeit der Huminsäure enthaltenden Feststoffe in der Gülle von 2 bis 120 Minuten erfolgt. Das bekannte Verfahren soll den Vorteil haben, dass bestimmte Inhaltsstoffe der Gülle an die Feststoffe gebunden werden, sodass nach einer Separation die resultierende flüssige Phase einen merklich geringeren Anteil an diesen Stoffen aufweisen soll als die unbehandelte Gülle. Die bei dem bekannten Verfahren abgetrennte flüssige Phase wird zur weitergehenden Verringerung bestimmter Gehalte weiter behandelt, was verhältnismäßig aufwendig ist.

Gülle wird wegen ihres Gehalts an vergärbarer Substanz auch in Biogasanlagen eingesetzt. Aufgrund eines sehr hohen Wassergehaltes und des niedrigen Anteils an vergärbarer Substanz hat die Verwendung von Gülle in Biogasanlagen den Nachteil, dass ein hoher Anteil von Wasser durch die Anlage zirkuliert werden muss.

Aufgrund der in der Gülle enthaltenen Pflanzennährstoffe, wie Stickstoff, Phosphor und Kalium bietet sich an, Gülle als sogenannten Wirtschaftsdünger in der Landwirtschaft einzusetzen.

Eine übermäßige Gülle-Ausbringung führt jedoch zumindest teilweise zur Überdüngung und dadurch zur Belastung von Grund- und Oberflächenwasser mit Nitraten.

Es wäre daher grundsätzlich wünschenswert, ein Verfahren bereitzustellen, das eine wirksame und einfache Verringerung der in der Gülle vorhandenen Pflanzennährstoffe ermöglicht.

Es wäre weiterhin wünschenswert, ein Verfahren bereitzustellen, das den Wassergehalt von Gülle vermindert, und dadurch den Anteil an vergärbarer Substanz zu erhöhen.

Versuche mit dem in der EP 0 449 184 A1 beschriebenen Verfahren haben allerdings gezeigt, dass eine zufriedenstellende Verringerung der in der Gülle vorhandenen Pflanzennährstoffe ohne Nachbehandlung der flüssigen Phase nicht ohne weiteres möglich ist. Auch bereitet die technische Umsetzung dieses Verfahrens Schwierigkeiten, da sich herausgestellt hat, dass Mischungen von Braunkohle und Gülle sich nur schlecht in feste und flüssige Phasen auftreten lassen.

Der Erfindung liegt daher die Aufgabe zugrunde, ein Verfahren der eingangs genannten Art bereitzustellen, mit welchem eine hohe Abscheidung von Pflanzennährstoffen und vergärbarer Substanz aus der flüssigen Phase möglich ist und das verhältnismäßig einfach praktisch umsetzbar ist.

Die Aufgabe wird gelöst mit den Merkmalen des Anspruchs 1, vorteilhafte Ausgestaltungen der Erfindung ergeben sich aus den Unteransprüchen.

Die Anmelderin hat überraschend herausgefunden, dass sich bei der verhältnismäßig hohen Verweilzeit, die erfindungsgemäß vorgesehen ist, ein Quelleffekt einstellt, bei welchem die huminsäurehaltigen, körnigen Feststoffe mit der Gülle oder den Gärresten gemeinsam verquollen werden.

Die Verweilzeit von Gülle oder Gärresten und huminsäurehaltigem, körnigem Feststoff wird erfindungsgemäß in eine Mischphase, eine Bindungsphase, eine Akkumulationsphase und eine Trennphase unterteilt.

In der Mischphase werden die Gülle oder die Gärreste und die huminsäurehaltigen Feststoffe zusammengebracht und innig vermischt, gegebenenfalls unter intensiver Agitation. In der Bindungsphase erfolgt eine Bindung der Pflanzennährstoffe wie Stickstoff, Phosphor und Kalium an die huminsäurehaltigen, körnigen Feststoffe. In der Akkumulationsphase beginnen die huminsäurehaltigen, körnigen Feststoffe aufzuquellen. Die Akkumulationsphase und die Trennphase überlappen einander. Während der Trennphase stellt sich eine Trennung einer flüssigen Phase von einer Schwimmschicht und einer Bodenschicht an Feststoffen ein. Erst dann ist es verhältnismäßig einfach möglich, die flüssige Phase von dem Feststoff bzw. von der festen Phase zu trennen, gegebenenfalls nach nochmaliger Durchmischung. Während der Bindungsphase, der Akkumulationsphase und der Trennphase erfolgt zweckmäßigerweise kein Umrühren oder Umsetzen der Mischung, sondern die Mischung ruht.

Nach der erfindungsgemäß vorgesehenen, verhältnismäßig langen Verweilzeit ist es überraschenderweise besonders einfach, die flüssige Phase und die feste Phase mechanisch voneinander zu trennen, beispielsweise mittels Filtration/Absiebung.

Die Verweilzeit bzw. Einwirkzeit beträgt erfindungsgemäß zwischen einem und 120 Tagen, vorzugsweise zwischen 10 und 60 Tagen.

Bevorzugt sind die huminsäurehaltigen, körnigen Feststoffe ausgewählt aus einer Gruppe von Feststoffen umfassend Braunkohle, Rohbraunkohle, Trockenbraunkohle, Wirbelschicht-Braunkohle, Braunkohlenkoks, aus Braunkohle hergestellte Produkte und Reste solcher Produkte, wie beispielsweise Brikett-Abrieb, und Torf.

Unter Rohbraunkohle im Sinne der Erfindung ist grubenfeuchte und nur vorgebrochene oder vorzerkleinerte, nicht weiter aufbereitete Braunkohle zu verstehen. Da Braunkohle ein bergmännisch gewonnenes Naturprodukt ist, lässt sich über die genaue Zusammensetzung der Braunkohle keine Aussage treffen. Rohbraunkohle hat in der Regel einen Feuchtigkeitsgehalt von 30 bis 55 Gewichtsprozent.

Trockenbraunkohle ist vorzerkleinerte und getrocknete Rohbraunkohle, die in der Regel einen Feuchtigkeitsgehalt zwischen 10 und 20 Gewichtsprozent aufweist.

Wirbelschicht-Braunkohle ist eine Trockenbraunkohle mit einer Körnung zwischen 0 und 4 mm, welche in Wirbelschicht-Feuerungsanlagen üblicherweise als Brennstoff eingesetzt wird. Der Wassergehalt beträgt ca. 13 Gewichtsprozent.

Braunkohlenkoks ist ein industrielles Produkt, das durch von Verkokung von Rohbraunkohle erhalten wurde, wobei der Braunkohlenkoks auch als Aktivkoks bezeichnet wird und ein kohlenstoffangereichertes Produkt ist, welches ein vergrößertes Porenvolumen und somit eine vergrößerte Adoptionskapazität aufweist.

Die zuvor genannten Materialien können jeweils für sich oder auch in Mischung Anwendung finden.

Bei einer bevorzugten Variante des Verfahrens gemäß der Erfindung ist vorgesehen, dass die Gülle oder die Gärreste in einem ersten Vorratsbehälter nach einer Zugabe der huminsäurehaltigen, körnigen Feststoffe über eine vorgegebene Lagerzeit vorzugsweise ohne Agitation gelagert wird. Ein solcher Vorratsbehälter kann beispielsweise ein Lagerbecken oder ein Silo in einem landwirtschaftlichen Betrieb sein.

Bei einer besonders bevorzugten Variante des Verfahrens umfasst der Verfahrensschritt des Mischens die Rezirkulation der Gülle oder der Gärreste durch eine Kreislaufleitung, wobei die huminsäurehaltigen, körnigen Feststoffe mittels eines Injektors der Kreislaufleitung aufgegeben werden.

Insbesondere wenn das erfindungsgemäße Verfahren die Behandlung von Gülle umfasst, kann alternativ vorgesehen sein, die Gülle direkt durch einen geschlitzten Stallboden in einen unter dem Stallboden befindlichen Auffangraum zu verbringen, in welchem die Zugabe der huminsäurehaltigen, körnigen Feststoffe erfolgen kann. Bei hinreichend flüssiger Gülle kann mit Zugabe der huminsäurehaltigen körnigen Feststoffe eine Schwimmschicht auf der Gülleoberfläche gebildet werden. Die Schwimmschicht behindert den Übergang von Geruchsstoffen aus der flüssigen Gülle in die Umgebungsluft, sodass eine Geruchsbelastung im Stall und/oder in der Umgebung reduziert wird.

Werden die körnigen Feststoffe mittels eines Injektor aus einer Kreislaufleitung aufgegeben, wie vorstehend beschrieben ist, kann der Injektor beispielsweise als Saugstrahlpumpe ausgebildet sein, wobei die Saugstrahlpumpe zweckmäßigerweise über die Rezirkulation der Gülle durch die Kreislaufleitung angetrieben ist. Eine solche passive Pumpe arbeitet nach dem Venturi-Prinzip, wobei der durch die Kreislaufleitung gepumpte Volumenstrom an Gülle in dem Injektor einen Unterdruck erzeugt, über den die huminsäurehaltigen körnigen Feststoffe in die Kreislaufleitung gesaugt werden. Die Kreislaufleitung kann eine Umwälzpumpe, beispielsweise in Form einer Drehkolbenpumpe oder einer Kreiselpumpe, umfassen, die die Gülle oder die Gärreste in Form eines Treibstrahls durch den Injektor treibt.

In einem landwirtschaftlichen Betrieb kann der Injektor beispielsweise über eine entsprechende Leitung an einen Vorratsbehälter für die huminsäurehaltigen Feststoffe angeschlossen werden. Ein solcher Vorratsbehälter kann ein fest installiertes Silo sein, der Injektor kann allerdings auch an ein Silofahrzeug angeschlossen werden.

Alternativ kann als Vorratsbehälter für die Gülle auch ein fahrbarer Feldrandcontainer vorgesehen sein.

In der Kreislaufleitung wird die Gülle oder die Gärreste mit den huminsäurehaltigen Feststoffen intensiv vermischt, wobei die Mischung aus der Kreislaufleitung dem ersten Vorratsbehälter aufgegeben wird.

Bei einer bevorzugten Variante des Verfahrens gemäß der Erfindung ist vorgesehen, dass die Gülle oder die Gärreste nach Beendigung der Verweilzeit und vor der Trennung der festen und flüssigen Phase ein zweites Mal gemischt wird. Ein solcher zweiter Mischvorgang kann vor oder während eines Umsetzens der Mischung in einen zweiten Vorratsbehälter erfolgen, sodass sichergestellt ist, dass beim Umschlagen der Mischung aus dem ersten Vorratsbehälter in den zweiten Vorratsbehälter in dem ersten Vorratsbehälter kein Bodensatz verbleibt.

Es hat sich überraschenderweise herausgestellt, dass bei einer wiederholten Durchmischung der flüssigen und der festen Phase nach der verhältnismäßig langen Verweilzeit von bis zu 120 Tagen eine mechanische Trennung der flüssigen und der festen Phase nicht erschwert wird.

Bei Verwendung mehrerer kaskadierter Vorratsbehälter kann das Verfahren gemäß der Erfindung quasi kontinuierlich betrieben werden. Der Vorgang des Einwirkens der Mischung während der Verweilzeit ist an und für sich ein diskontinuierlicher Vorgang, unter kontinuierlich im Sinne der vorliegenden Patentanmeldung ist die zyklische Wiederholung aller Verfahrensschritte zu verstehen.

Zweckmäßigerweise wird die Gülle mit 2 bis 25 Gewichtsprozent vorzugsweise mit 5 bis 20 Gewichtsprozent an huminsäurehaltigen körnigen Feststoffen gemischt.

Bei einer Variante des Verfahrens ist vorgesehen, als huminsäurehaltigen, körnigen Feststoff Trockenbraunkohle zu verwenden.

Bevorzugt werden etwa 40 bis 120 kg Trockenbraunkohle bezogen auf 1 m³ Gülle zugegeben.

Das Trennen der festen und flüssigen Phase kann beispielsweise mittels eines Pressschnecken-Separators oder mittels einer Zentrifuge, einer Siebzentrifuge oder mittels eines Siebes durchgeführt werden.

Die flüssige Phase kann beispielsweise ohne weitere Aufbereitung als flüssiger Dünger verwendet werden. Dieser flüssige Dünger ist besonders für die Feldausbringung geeignet, da er hinsichtlich der Nährstoffe abgereichert ist, wodurch die Gefahr einer Überdüngung verringert wird. Insbesondere ist die Phosphatfracht der so erhaltenen flüssigen Phase signifikant geringer als die Phosphatfracht der Gülle.

Die feste Phase kann beispielsweise kompostiert oder thermisch verwertet werden. Die feste Phase kann beispielsweise als Humus-Dünger verwendet werden. Der Humus-Dünger kann entweder direkt oder nach einer Kompostierung auf Ackerflächen zu Düngezwecken eingesetzt werden.

Alternativ kann die feste Phase zwecks Herstellung eines hochkonzentrierten Phosphatdüngers in einer Feuerungsanlage verbrannt werden. Dadurch lässt sich ein Düngerkonzentrat herstellen, dass mit Nährstoffen hoch angereichert ist. Ein solches Düngerkonzentrat hat den Vorzug, dass die aus der Braunkohle stammende Komponenten wie beispielsweise Kalziumoxid und Magnesiumoxid umfasst.

Die Erfindung wird nachstehend beispielsweise anhand eines in den Zeichnungen dargestellten Ausführungsbeispiels erläutert. Das Ausführungsbeispiel bezieht sich auf die Behandlung von Gülle. Wie vorstehend bereits erwähnt, ist das Verfahren auch zur Behandlung von Gärresten geeignet.

Es zeigen:
- Figur 1: eine schematische Darstellung einer Anlage zur Durchführung des Verfahrens gemäß der Erfindung nach einem ersten Ausführungsbeispiel,
- Figur 2: eine schematische Darstellung einer Anlage zur Durchführung des Verfahrens gemäß der Erfindung nach einem zweiten Ausführungsbeispiel und
- Figur 3: ein das Verfahren veranschaulichendes Diagramm.

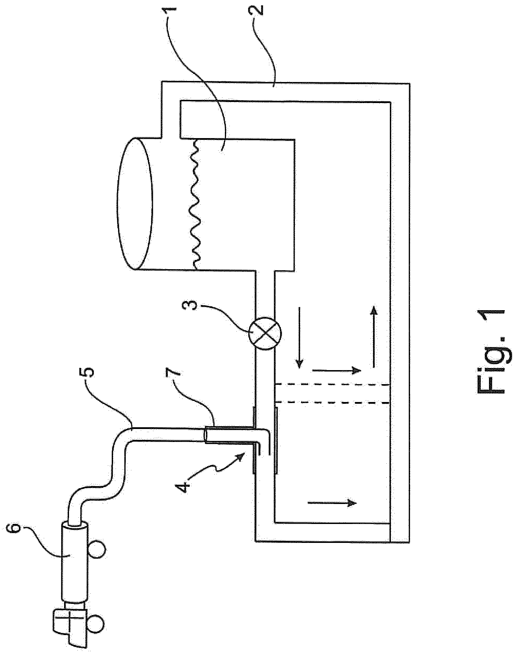

Die Anlage zur Durchführung des Verfahrens nach dem Ausführungsbeispiel gemäß Figur 1 umfasst einen ersten Vorratsbehälter 1, eine an den ersten Vorratsbehälter 1 angeschlossene Kreislaufleitung 2, eine in der Kreislaufleitung 2 angeordnete Umwälzpumpe 3 sowie einen an die Kreislaufleitung angeschlossenen Injektor 4.

Der erste Vorratsbehälter 1 umfasst einen Vorrat an Gülle, im vorliegenden Fall einen Vorrat an Dünngülle mit einem verhältnismäßig hohen Wasseranteil. An den Injektor 4 ist mittels einer Schlauchleitung 5 ein Silofahrzeug 6 angeschlossen, welches beispielsweise mit Trockenbraunkohle beladen ist. Mittels der Umwälzpumpe 3 wird die Gülle aus dem ersten Vorratsbehälter 1 entnommen. Der Umwälzpumpe in Förderrichtung der Gülle nachgeschaltet ist in der Kreislaufleitung 2 der Injektor 4 angeordnet. Die Gülle erzeugt in dem Injektor 4 beim Durchströmen einen Unterdruck an einem Ansaugstutzen 7, an welchem die Schlauchleitung 5 angeschlossen ist. Der Injektor 4 zieht die Trockenbraunkohle aus dem Silofahrzeug 6 in die Kreislaufleitung 2, wobei die Trockenbraunkohle mit der Gülle innig vermischt wird. In Abhängigkeit von der in dem ersten Vorratsbehälter 1 vorhandenen Menge an Gülle wird so viel Trockenbraunkohle aus einem oder mehreren Silofahrzeugen entladen, bis ein vorgegebenes Mischungsverhältnis von Trockenbraunkohle zu Gülle eingestellt ist. Gegebenenfalls wird die gesamte Mischung an Gülle und Trockenbraunkohle durch um Pumpen im Kreislauf homogenisiert. Dann wird die gesamte Mischung an Gülle und Trockenbraunkohle in dem ersten Vorratsbehälter über eine Verweilzeit von einem bis 120 Tagen, vorzugsweise über eine Verweilzeit von 10 bis 60 Tagen stehen gelassen, so dass Gülle und Trockenbraunkohle aufeinander einwirken können.

Nach dem ersten Vermischen von Gülle und Trockenbraunkohle ist die Trockenbraunkohle in der Gülle gleichmäßig dispergiert. Nach etwa 10 Tagen Verweilzeit stellt sich eine Separation einer Schwimmschicht und einer Bodenschicht aus festen Bestandteilen (feste Phase) in dem ersten Vorratsbehälter 1 ein. Nach etwa 15 bis 20 Tagen ist ein Absinken der Schwimmschicht sowie ein starkes Aufquellen des gesamten Volumens innerhalb des ersten Vorratsbehälters 1 zu beobachten. Das Volumen der Mischung reduziert sich über den weiteren Verlauf der Verweilzeit aufgrund von Verdunstung von Wasser. Die nachfolgende Tab. 1 zeigt den Nährstoffgehalt der eingesetzten Gülle und den Eliminierungsgrad der Pflanzennährstoffe aus der Gülle nach dem ersten Vermischen und der sich daran anschließenden Abtrennung der festen Phase.

**Tabelle 1: Nährstoffgehalt der eingesetzten Gülle sowie Eliminierungsgrad von Pflanzennährstoffen aus Gülle nach Vermischen mit Braunkohle**

| Nährstoff | N | P₂O5 | K₂O |
|---|---|---|---|
| kg/t | 1,9 | 2,5 | 2,0 |
| Eliminierungsgrad E (%) | 26 | 96 | 5 |

bei einem Mischungsverhältnis von 50 kg Wirbelschichtbraunkohle (WBK) pro m³ (= 1t) Gülle

Der Eliminierungsgrad E (%) gibt an zu wieviel Prozent eine Komponente aus der Gülle durch Adsorption an Braunkohle angelagert wird.

### Beispiel:

### P₂O₅:

96 Prozent des Phosphats, angegeben als P₂O₅, werden aus der Gülle eliminiert und an der Braunkohle adsorbiert, das sind 2,40 kg P₂O₅, die an 50 kg Braunkohle adsorbiert sind.

Aus 50 kg Braunkohle sind nach Adsorption von P₂O₅ entstanden: 50 + 2,4 kg =52,40 kg beladene (mit P₂O₅) Braunkohle.

Bei Anwendung einer analogen Rechnung für Stickstoff (N) und Kalium (K₂O) ergibt sich eine Beladung von Braunkohle mit Pflanzennährstoffen aus Gülle gemäß der nachstehend wiedergegebenen Tab. 2.

**Tabelle 2: Beladung von Braunkohle mit Pflanzennährstoffen aus Gülle**

| 50 kg Braunkohle mit einem Wassergehalt von 13,84 % Wassergehalt entsprechen 43,08 kg BK (wf) | | |
|---|---|---|
| | 43,08 kg Braunkohle | (BK)wasserfrei (wf) |
| + | 2,40 kg | P₂O₅ |
| + | 0,1 kg | K₂O |
| + | 0,494 kg | N |
| Summe | 46,074 kg | Humusdünger (wf) |

Bei einem Aschegehalt von 3,49 % entstehen bei der Verbrennung von 50kg Braunkohle 1,74 kg Asche.

Bei der Verbrennung des Humusdüngers bleiben P₂O₅ und K₂O unverändert, da bereits höchste Oxidationsstufe erreicht ist; N entweicht gasförmig (als NOx).

Die Zusammensetzung der Asche aus dem Humusdünger ist in Tabelle 3 angegeben.

**Tabelle 3: Zusammensetzung der Humusdünger-Asche**

| | | | |
|---|---|---|---|
| | | Masseanteil (%) | |
| | 1,745 kg | Asche aus Braunkohle | 41,1 |
| + | 2,40 kg | P₂O₅ | 56,5 P₂O₅ |
| + | 0,1 kg | K₂O | 2,4 K₂O |
| = Summe | 4,245 kg | Asche aus Humusdünger | 100 |

Die Aschezusammensetzung von Braunkohle und Humusdünger ergibt sich aus Tab. 4.

**Tabelle 4: Aschezusammensetzung von Braunkohle und Humusdünger**

| | | | | | |
|---|---|---|---|---|---|
| Aschezusammensetzung von nicht beladener | | | | | |

| Wirbelschicht-Braunkohle und beladener Wirbelschicht - Braunkohle, Bezugsmenge (wf) | | | | | |
|---|---|---|---|---|---|
| Oxid | Gew.% | kg/t | Oxid | kg | Gew.% |
| SiO₂ | 2,70 | 27 | SiO₂ | 0,94 | 1,11 |
| Fe₂O₃ | 11,20 | 112 | Fe₂O₃ | 3,91 | 4,60 |
| Al₂O₃ | 2,50 | 25 | Al₂O₃ | 0,87 | 1,03 |
| CaO | 32,10 | 321 | CaO | 1120 | 13,2 |
| MgO | 13,90 | 139 | MgO | 4,85 | 5,71 |
| Na₂O | 6,20 | 62 | Na₂O | 2,16 | 2,55 |
| K₂O | 0,60 | 6 | K₂O | 2,21 | 2,60 |
| SO₃ | 14,30 | 143 | SO₃ | 4,99 | 5,88 |
| MnO | 0,10 | 1 | MnO | 0,03 | 0,04 |
| BaO | 0,20 | 2 | BaO | 0,07 | 0,08 |
| TiO₂ | 0,30 | 3 | TiO₂ | 0,10 | 0,12 |
| P₂O₅ | <0,20 | 1 | P₂O₅ | 48,03 | 56,58 |
| | | | Rest | 5,51 | 6,49 |
| | | | Summe | 84,90 | 100,00 |

Ein Aschegehalt der Wirbelschicht - Braunkohle
in Höhe von 3,49 Gew.% entspricht 34,9 kg/t

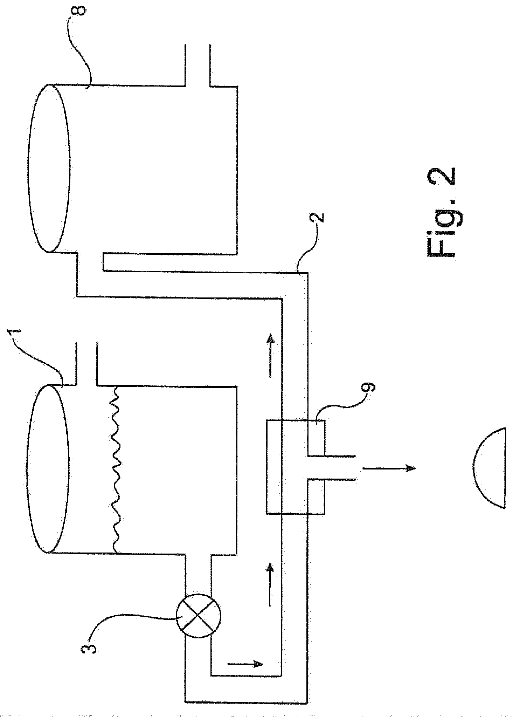

Figur 2 zeigt ein zweites Ausführungsbeispiel einer Anlage zur Durchführung des Verfahrens. Diese Anlage unterscheidet sich von der in Figur 1 dargestellten Anlage dadurch, dass ein erster und ein zweiter Vorratsbehälter 8 vorgesehen sind. Der erste Vorratsbehälter 1 und der zweite Vorratsbehälter 8 kaskadenförmig hintereinander angeordnet. Die Erfindung ist so zu verstehen, dass mehr als zwei Vorratsbehälter vorgesehen sein können. Im Übrigen sind bei dem Ausführungsbeispiel gemäß Figur 2 gleiche Bauteile mit gleichen Bezugszeichen wie bei dem Ausführungsbeispiel in Figur 1 versehen. Bei der Anordnung der ersten und zweiten Vorratsbehälter 1, 8 gemäß Figur 2 sind aus Vereinfachungsgründen ein Silofahrzeug oder ein Vorratsbehälter für die Trockenbraunkohle und der Injektor 4 sowie gegebenenfalls erforderliche Bypass Leitungen nicht dargestellt. Insoweit ist die Darstellung in Figur 2 stark vereinfacht.

Die Separation der flüssigen Phase von der festen Phase des in dem ersten Vorratsbehälter 1 enthaltenen Gemischs erfolgt in einem Separator 9. Die flüssige Phase wird in den zweiten Vorratsbehälter 8 überführt. Im Rahmen der Kaskadenschaltung des ersten und des zweiten Vorratsbehälters 1, 8 kann die in dem zweiten Vorratsbehälter 8 bevorrate flüssige Phase erneut mit Trockenbraunkohle vermischt werden, um nach Abtrennung der festen Phase eine weitere Verminderung der gelösten Nährstoffe zu erreichen. Die Beimischung von Trockenbraunkohle kann wie vorstehend zu Figur 1 erläutert erfolgen.

Zusätzlich kann vorgesehen sein, dass die Gülle nach Beendigung der Verweilzeit in dem ersten Vorratsbehälter 1 und vor der Trennung der festen und flüssigen Phase in dem Separator 9 ein weiteres Mal gemischt wird. Die für das Mischen erforderliche Anlagenschaltung ist in Figur 1 dargestellt. Der Vorgang der Mischung nach Beendigung der Verweilzeit und vor der Trennung der festen und flüssigen Phase erfolgt gemäß Figur 1 durch Pumpen im Kreislauf. Der Inhalt des ersten Vorratsbehälters 1 wird durch die Umwälzpumpe 3 über die gestrichelte Linie in der Kreislaufleitung 2 wieder zurück in den ersten Vorratsbehälter 1 gepumpt.

Nach diesem zweiten Mischen und vor der Trennung der festen und flüssigen Phase kann die Gülle alternativ dem zweiten Vorratsbehälter 8 oder einem weiteren Vorratsbehälter aufgegeben werden.

Die Erhöhung des Phosphatgehaltes durch das erfindungsgemäße Verfahren nach der in Figur 2 dargestellten Variante des Verfahrens ist in Tabelle 5 dargestellt. Der in Tab. 5 erwähnte Feststoff ist derjenige Feststoff, der gemäß Figur 2 nach der ersten Fest-flüssig-Trennung erhalten wird. Ausgehend von der Gülle (Phosphatgehalt 2,5 kg/t) wird eine erste Aufkonzentration um den Faktor 21 erreicht im Feststoff 1 und um den Faktor 226 in der Humusdünger-Asche.

**Tabelle 5: Erhöhung des Phosphatgehaltes durch das erfindungsgemäße Verfahren**

| Produkt | Gülle | Feststoff (Humusdünger) | Humusdünger-Asche |
|---|---|---|---|
| Phosphat Konzentration, angeben als P₂O₅ | 2,5 kg/t Gülle | 2,4 kg / 46,074 kg Humusdünger (wf) | 48,03 kg / 84,90 kg Humusdüngerasche |
| Masseanteil Phosphat (Masse %), angegeben als P₂O₅ | 0,25 | 5,2 | 56, 58 |
| Erhöhung des Massenanteils Phophat gegenüber Gülle um Faktor | | 21 | 226 |

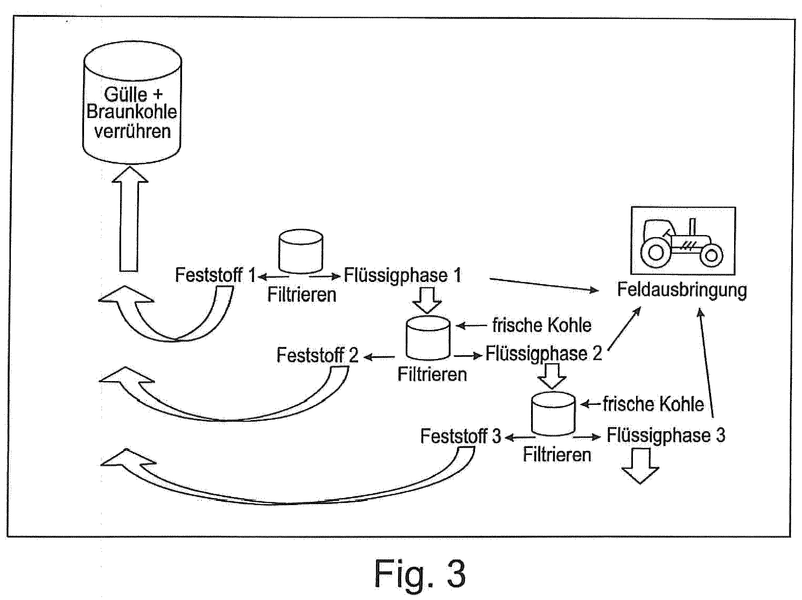

In Figur 3 ist schematisch ein möglicher Verfahrensablauf gemäß der Erfindung dargestellt. Danach werden zunächst Gülle mit Braunkohle verrührt. Nach der erfindungsgemäß vorgesehenen Verweilzeit werden die feste Phase und die flüssige Phase (Feststoff 1/Flüssigphase 1) voneinander getrennt, beispielsweise durch Filtration. Die flüssige Phase wird erneut mit Trockenbraunkohle gemischt. Dem folgt ein weiteres Einwirken von Gülle und Trockenbraunkohle über die erfindungsgemäß vorgesehene Verweilzeit. Erneut wird die flüssige Phase von der festen Phrase getrennt (Feststoff 2/Flüssigphase 2). Wie in Figur 3 dargestellt, kann diese Zyklus so oft wiederholt werden, bis die flüssige Phase den gewünschten Nährstoffgehalt aufweist. Die flüssige Phase kann beispielsweise als Flüssigdünger ausgebracht werden (Feldausbringung). Die feste Phase (Feststoff 1) kann beispielsweise kompostiert und/oder thermisch verwertet werden. Im Rahmen des erfindungsgemäßen Verfahrens ist es möglich, die festen Phasen (Feststoff 2, Feststoff 3 etc.) mit frischer Gülle zu vermischen, da die Beladung der Kohle mit Inhaltsstoffen aus der Gülle aus den bereits abgereicherten flüssigen Phasen nur gering ist.

### Bezugszeichenliste

- 1: erster Vorratsbehälter
- 2: Kreislaufleitung
- 3: Umwälzpumpe
- 4: Injektor
- 5: Schlauchleitung
- 6: Silofahrzeug
- 7: Ansaugstutzen
- 8: zweiter Vorratsbehälter
- 9: Separator

## Patentansprüche

1. Verfahren zur Behandlung von Gülle oder Gärresten umfassend folgende Verfahrensschritte:
- Ein erstes Mischen der Gülle oder der Gärreste mit huminsäurehaltigen, körnigen Feststoffen,
- Einwirken von Gülle oder Gärresten und den huminsäurehaltigen, körnigen Feststoffen über eine Verweilzeit, bis sich in der Mischung von Gülle und Feststoffen eine Schichtbildung zwischen flüssigen und festen Phasen einstellt,
- Trennen der festen Phase von der flüssigen Phase des Gemischs.

2. Verfahren nach Anspruch 1, **dadurch gekennzeichnet, dass** die Verweilzeit 1 und 120 Tagen, vorzugsweise zwischen 10 und 60 Tagen beträgt.

3. Verfahren nach einem der Ansprüche 1 oder 2, **dadurch gekennzeichnet, dass** die huminsäurehaltigen, körnigen Feststoffe ausgewählt sind aus einer Gruppe von Feststoffen umfassend Braunkohle, Rohbraunkohle, Trockenbraunkohle, Wirbelschicht-Braunkohle, Braunkohlenkoks, aus Braunkohle hergestellte Produkte, Reste von aus Braunkohle hergestellten Produkten und Torf.

4. Verfahren nach einem der Ansprüche 1 bis 3, **dadurch gekennzeichnet, dass** die Gülle oder die Gärreste in einem ersten Vorratsbehälter (1) nach einer Zugabe der huminsäurehaltigen, körnigen Feststoffe über eine vorgegebene Lagerzeit ohne Agitation gelagert wird.

5. Verfahren nach einem der Ansprüche 1 bis 4, **dadurch gekennzeichnet, dass** der Verfahrensschritt des Mischens die Rezirkulation der Gülle oder der Gärreste durch eine Kreislaufleitung (2) umfasst, wobei die huminsäurehaltigen, körnigen Feststoffe mittels eines Injektors (4) der Kreislaufleitung (2) aufgegeben werden.

6. Verfahren nach Anspruch 5, **dadurch gekennzeichnet, dass** als Injektor (4) eine Saugstrahlpumpe verwendet wird, die durch die Rezirkulation der Gülle oder der Gärreste angetrieben wird.

7. Verfahren nach einem der Ansprüche 1 bis 6, **dadurch gekennzeichnet, dass** die Gülle oder die Gärreste nach Beendigung der Verweilzeit und vor der Trennung der festen und flüssigen Phase ein zweites Mal gemischt wird.

8. Verfahren nach Anspruch 7, **dadurch gekennzeichnet, dass** die Gülle nach dem zweiten Mischen und nach der Trennung der festen und flüssigen Phase einem zweiten oder weiteren Vorratsbehälter (8) aufgegeben wird.

9. Verfahren nach einem der Ansprüche 1 bis 8, **dadurch gekennzeichnet, dass** die Gülle oder die Gärreste mit 1 bis 25 Gewichtsprozent, vorzugsweise mit 5 bis 15 Gewichtsprozent an huminsäurehaltigen körnigen Feststoffen gemischt wird.

10. Verfahren nach einem der Ansprüche 1 bis 9, **dadurch gekennzeichnet, dass** als huminhaltiger, körniger Feststoff 40 bis 120 kg, vorzugsweise etwa 50 kg Trockenbraunkohle bezogen auf 1 m³ Gülle zugegeben wird.

11. Verfahren nach einem der Ansprüche 1 bis 10, **dadurch gekennzeichnet, dass** das Trennen der festen und flüssigen Phase mittels wenigstens eines Pressschnecken-Separators oder mittels einer Zentrifuge, einer Siebzentrifuge oder mittels eines Siebes durchgeführt wird.

12. Verfahren nach einem der Ansprüche 1 bis 11, **dadurch gekennzeichnet, dass** die flüssige Phase ohne weitere Aufbereitung als flüssiger Dünger verwendet wird.
